# EUROPÄISCHE PATENTANMELDUNG

(11) **EP 4 821 803 A1**
(43) Veröffentlichungstag der Anmeldung: **14.10.2026**
(21) Anmeldenummer: 26170300.3
(22) Anmeldetag: 01.04.2026
(51) Int. Cl.: B62J 11/10, B62J 11/13, B62J 11/19, B62K 19/30

(54) **VORRICHTUNG ZUM FÜHREN MINDESTENS EINES KABELS IN EINEM RAHMEN EINES ZWEIRADS**

(30) Priorität: 09.04.2025 DE 102025114062
(71) Anmelder: SCOTT Sports SA, 1762 Givisiez (CH)
(72) Erfinder: Tupin, Loris, 1762 Givisiez (CH)
(74) Vertreter: Keller Schneider Patent- und Markenanwälte AG

(57) **Zusammenfassung**

Eine Vorrichtung zum Führen mindestens eines Kabels in einem Rahmen eines Zweirads umfasst eine an einem ersten Rohr des Rahmens anbringbare Einleitungseinrichtung (1) zum Einleiten des mindestens einen Kabels in das erste Rrohr und mindestens einen Schlauch (51, 52, 53, 54) zur Aufnahme des Kabels. Der mindestens eine Schlauch (51, 52, 53, 54) ist mit einem ersten Ende an der Einleitungseinrichtung (1) angeordnet und im ersten Rohr und mindestens einem weiteren Rahmenrohr aufnehmbar.

## Beschreibung

### Technisches Gebiet

Die Erfindung betrifft eine Vorrichtung zum Führen mindestens eines Kabels in einem Rahmen eines Zweirads sowie einen Rahmen mit einer solchen Vorrichtung.

### Stand der Technik

Kabel (insbesondere Züge, hydraulische Leitungen oder elektrische Kabel) werden immer mehr innerhalb des Rahmens von Zweirädern, namentlich Fahrrädern und E-Bikes, geführt (interne Kabelführung).

Die interne Kabelführung vermeidet Beschädigungen der Kabel durch Schmutz, Wasser und mechanische äussere Einflüsse. Sie verbessert die Aerodynamik des Fahrrads und dessen ästhetisches Erscheinungsbild. Gerade Carbonrahmen bieten zudem flexible Gestaltungsoptionen für die Integration der Kabelführung. Neuere Entwicklungen wie hydraulische Bremssysteme und elektrische Schaltsysteme profitieren besonders von der internen Kabelführung.

Eine bestmögliche Integration der Kabel wird erreicht, wenn die Kabel bereits im Bereich der Gabel in den Rahmen eingeführt werden und nicht erst ins Ober- und/oder Unterrohr.

Mit der internen Kabelführung gehen aber auch Herausforderungen einher:
- Die Installation und Wartung von intern verlegten Kabeln erfordert mehr Zeit und spezielles Werkzeug, da der Zugang eingeschränkt ist.
- Besonders bei hydraulischen Bremsen kann die Entlüftung oder der Austausch komplizierter sein.
- Der Rahmenbau wird aufwendiger, da spezielle Öffnungen und Kanäle für die Leitungen integriert werden müssen. Dies kann die Herstellungskosten erhöhen.
- Bei unsachgemässer Montage können Kabel im Rahmen klappern, was die Geräuschentwicklung beim Fahren erhöht.

### Darstellung der Erfindung

Aufgabe der Erfindung ist es, eine dem eingangs genannten technischen Gebiet zugehörende Vorrichtung zum Führen mindestens eines Kabels in einem Rahmen eines Zweirads zu schaffen, welches einen, mehrere oder alle vorgenannten Nachteile vermeidet.

Die Lösung der Aufgabe ist durch die Merkmale des Anspruchs 1 definiert. Gemäss der Erfindung umfasst die Vorrichtung
a) eine an einem ersten Rohr des Rahmens anbringbare Einleitungseinrichtung zum Einleiten des mindestens einen Kabels in das erste Rohr und
b) mindestens einen Schlauch zur Aufnahme des Kabels.

Dabei ist der mindestens eine Schlauch mit einem ersten Ende an der Einleitungseinrichtung angeordnet und im ersten Rohr und mindestens einem weiteren Rahmenrohr aufnehmbar.

Beim Zweirad handelt es sich insbesondere um ein Fahrrad bzw. ein Fahrrad mit unterstützendem Antrieb (E-Bike, Pedelec usw.).

Die Einleitungsvorrichtung dient dazu, das mindestens eine Kabel von einem Aussenraum, z. B. im Lenkerbereich, in den Rahmen des Zweirads zu führen. Der mit seinem ersten Ende an der Einleitungseinrichtung angeordnete Schlauch dient dazu, das mindestens eine Kabel weiter innerhalb des Rahmens zu führen, z. B. vom Steuerrohr als erstes Rohr weiter in das Unterrohr oder vom Steuerrohr weiter in das Oberrohr. Der mindestens eine Schlauch hat entsprechend bevorzugt eine Länge von mindestens 20 cm, insbesondere mindestens 50 cm. So kann das Kabel innerhalb des Schlauchs insbesondere bis in den hinteren Endbereich des Unterrohrs oder des Oberrohrs geführt werden, insbesondere bis in den Bereich des letzten Viertels des entsprechenden Rohrs. Bei der Bemessung der Schlauchlänge wird die zusätzliche Länge berücksichtigt, welche aufgrund von Lenkerbewegungen benötigt wird.

Beim Schlauch handelt es sich insbesondere um einen flexiblen Schlauch. Dieser vereinfacht die Montage und ermöglicht Bewegungen, um beispielsweise Bewegungen des Lenkers zu folgen. Alternativ können aber auch steife oder formstabile Schläuche zum Einsatz gelangen.

Die Vorrichtung kann mehrere Schläuche umfassen, wobei bevorzugt jeder der Schläuche jeweils ein Kabel aufnimmt. Die Vorrichtung kann derart ausgestaltet sein, dass die Einleitungsvorrichtung zum Einleiten einer Anzahl von Kabeln, bis zu einer Maximalzahl, eingerichtet ist, und dass mit dieser Einleitungsvorrichtung auch eine geringere Zahl von Kabeln in den Rahmen eingeleitet werden können. So erübrigt es sich, für jede gewünschte Kabelzahl gesonderte Einleitungsvorrichtungen vorzuhalten.

Bei den Kabeln kann es sich insbesondere um Züge, um elektrische oder hydraulische Leitungen handeln.

Die Einleitungsvorrichtung und der daran angeordnete mindestens eine Schlauch sorgen für eine definierte Kabelführung. Sie schützen einerseits das Kabel vor äusseren Einflüssen, z. B. mechanischen Einflüssen und Feuchtigkeit. Namentlich wird auch ein Knicken von Kabeln verhindert, insbesondere bei schnellen und starken Lenkerbewegungen. Andererseits werden auch die Rahmeninnenseite und andere Komponenten, wie z. B. der Gabelschaft, vor mechanischen Beschädigungen aufgrund scheuernder oder schlagender Kabel, wie sie wiederum insbesondere aufgrund von Lenkbewegungen auftreten können, geschützt. Bisher eingesetzte gesonderte Elemente, z. B. Kunststoffnetze, zum Schutz des Gabelschafts erübrigen sich. Zudem werden unerwünschte Klappergeräusche vermieden.

Die Führung der Kabel in einem Schlauch, dessen Position durch die Anordnung an der Einleitungsvorrichtung fixiert ist, ermöglicht es, das im Schlauch geführte Kabel vom hinteren Ende des Schlauchs mühelos nach vorne, in Richtung der Einleitungsvorrichtung zu schieben, z. B. während der Montage oder für Wartungszwecke.

Mit Vorteil ist das erste Rohr ein Steuerrohr des Zweirads, und die Einleitungseinrichtung umfasst ein ringförmiges Element zur Anordnung im Steuerrohr. Dabei weist das ringförmige Element mindestens eine Öffnung zur Durchführung des Kabels in das Steuerrohr auf, und am ringförmigen Element ist ein starres Führungsteil angeordnet. Dabei ist das erste Ende des Schlauchs steuerrohrinnenseitig am Führungsteil angeordnet, derart, dass das Kabel durch die Öffnung in den Schlauch führbar ist.

Durch die Nutzung einer ohnehin vorhandenen Öffnung zum Einleiten des Kabels erübrigen sich zusätzliche Öffnungen im Steuerrohr, die dessen Struktur schwächen und potenzielle Abdichtungsprobleme schaffen könnten.

Das starre Führungsteil verhindert ein Verknicken des Kabels im Bereich der Einführung, wo die auf das Kabel wirkenden Kräfte ansonsten besonders gross wären. Das starre Führungsteil kann zudem so ausgebildet werden, dass eine zuverlässige Abdichtung erreicht wird. Als Material für das Führungsteil ist insbesondere ein geeigneter Kunststoff wie Polyamid oder PET geeignet. Diese Materialien sind leicht, robust und nicht korrosionsanfällig.

Bevorzugt ist das ringförmige Element ein Klemmring eines Steuersatzes. Durch die Nutzung eines ohnehin vorhandenen ringförmigen Elements wird der Bauteilaufwand minimiert.

Das Kabel wird insbesondere zwischen dem Klemmring und dem oberen Lager des Steuersatzes geführt. Der Klemmring und damit das Führungsteil folgen der Bewegung des Lenkers. Die in den Schläuchen geführten Kabel werden dann aufgrund dieser Drehbewegungen primär innerhalb des Steuerrohrs verformt, wobei die Art und der Umfang der Verformung aufgrund der definierten Führung durch das Führungsteil und die Unterstützung durch den jeweiligen Schlauch Grenzen einhalten, die eine kurz- und langfristige Beschädigung des Kabels vermeiden.

Bei alternativen Ausführungsformen ist das ringförmige Element in einem Presssitz im Steuerrohr aufnehmbar, also drehfest am Steuerrohr angeordnet. Der Gabelschaft wird dann innerhalb dieses ringförmigen Elements gelagert.

Beim ringförmigen Element kann es sich um ein einteiliges Bauteil handeln, oder es ist aus mehreren Teilen zusammengesetzt.

Mit Vorteil ist die mindestens eine Öffnung am Klemmring durch eine bogenförmige Ausnehmung an einem Aussenrand des ringförmigen Elements gebildet. Dies ermöglicht eine einfache aber stabile Konstruktion.

Bevorzugt ist das Führungsteil derart ausgebildet, dass im Bereich des ersten Endes eine Mittelachse des Schlauchs in einem Winkel zu einer zentralen Symmetrieachse des ringförmigen Elements verläuft. Dadurch verläuft das Kabel in einer schräg nach hinten unten verlaufenden Richtung vom Aussenraum in das weitere Rahmenrohr, und seine Biegung wird minimiert. Zudem kann das Kabel um den Gabelschaft herum geführt werden. Der Winkel beträgt insbesondere 20-60°, insbesondere 30-45°.

Mit Vorteil ist das Führungsteil am ringförmigen Element abnehmbar befestigbar, insbesondere mittels einer Schraub- und/oder Clipverbindung. Besonders bevorzugt ist eine Schraubverbindung, bei der der Schraubenkopf auf der Aussenseite des ringförmigen Elements, in einer passenden Aufnahme aufgenommen ist, und bei der das Gewinde mit einer Gewindeaufnahme am Führungsteil zusammenwirkt. Dadurch ist die Schraube einfach zugänglich und lässt sich bei Bedarf einfach und schnell lösen. Insbesondere umfasst die Schraubverbindung mehrere derartig angeordnete Schrauben.

Die Verbindung wird zusätzlich stabilisiert, wenn das Führungsteil stiftartige Vorsprünge aufweist, die mit passenden Aufnahmen auf der Unterseite des Klemmrings zusammenwirken. Die Gewindeaufnahmen können in diesen stiftartigen Vorsprüngen ausgebildet sein.

Alternativ ist das Führungsteil einstückig mit dem ringförmigen Element bzw. einem Bauteil des ringförmigen Elements ausgeführt.

Mit Vorteil sind am Führungsteil mindestens zwei Schläuche befestigbar. Dabei sind die mindestens zwei Schläuche insbesondere durch dieselbe Öffnung des ringförmigen Elements führbar. Dies ermöglicht die zuverlässige Führung mehrerer Kabel, die durch dieselbe Öffnung in das Steuerrohr einführbar sind.

Bevorzugt sind am ringförmigen Element mindestens zwei Führungsteile modular anbringbar. Jedes der Führungsteile lässt sich somit einzeln gegen ein anderes gleichartiges oder unterschiedliches Führungsteil auswechseln. Die zur Verfügung stehenden Führungsteile können zur Befestigung unterschiedlicher Anzahlen an Schläuchen ausgebildet sein. So kann beispielsweise ein Führungsteil eines ersten Typs (Typ I) bereitgestellt werden, das einen einzelnen Schlauchanschluss aufweist sowie ein Führungsteil eines zweiten Typs (Typ II) mit zwei Schlauchanschlüssen. Von diesen Führungsteilen können dann beispielsweise zwei gleichzeitig am ringförmigen Element befestigt werden, je eines auf der linken und der rechten Lenkerseite. Wenn in einer Aufnahme des ringförmigen Elements kein Führungsteil benötigt wird, kann sie beispielsweise mit einer Blende abgedeckt werden. Es sind somit folgende Konfigurationen möglich, in Abhängigkeit der Anzahl der zu führenden Kabel und der Richtung, aus der die Kabel zum oberen Ende des Steuerrohrs geführt werden:

| **linke Aufnahme** | **rechte Aufnahme** | **Kabel** |
|---|---|---|
| Blende | Typ I | 1 von rechts |
| Blende | Typ II | 2 von rechts |
| Typ I | Blende | 1 von links |
| Typ I | Typ I | 1 von links, 1 von rechts |
| Typ I | Typ II | 1 von links, 2 von rechts |
| Typ II | Blende | 2 von links |
| Typ II | Typ I | 2 von links, 1 von rechts |
| Typ II | Typ II | 2 von links, 2 von rechts |

Insbesondere sind zwei Aufnahmen für zwei Führungsteile (oder Blenden) vorhanden, und die Führungsteile werden in zwei symmetrischen Ausführungen bereitgestellt, so dass eine Kabelführung beidseits des Gabelschafts ermöglicht wird.

In alternativen Ausführungsformen ist nur ein Führungsteil modular am ringförmigen Element befestigbar. Dieses kann mehrere Schlauchanschlüsse (z. B. 2, 3 oder 4) aufweisen.

In einer weiteren Gruppe von Ausführungsformen umfasst die Einleitungseinrichtung ein Haltelement zur Anordnung in einer lateralen Öffnung im ersten Rohr, wobei das Halteelement mindestens eine Öffnung zur Durchführung des Kabels in das erste Rohr aufweist und wobei am Halteelement ein starres Führungsteil angeordnet ist, wobei das erste Ende des Schlauchs innenseitig des ersten Rohrs am Führungsteil angeordnet ist, derart dass das Kabel durch die Öffnung in den Schlauch führbar ist.

Mit Vorteil ist das Führungsteil am Halteelement abnehmbar befestigbar, insbesondere mittels einer Clipverbindung. Dies minimiert den Bauteilaufwand und erlaubt eine einfache Montage.

Mit Vorteil sind am Führungsteil mindestens zwei Schläuche befestigbar. Dabei sind die mindestens zwei Schläuche insbesondere durch dieselbe Öffnung des Halteelements führbar. Dies ermöglicht die zuverlässige Führung mehrerer Kabel, die durch dieselbe Öffnung in das erste Rohr einführbar sind.

Bevorzugt ist zur Befestigung des Schlauchs am Führungsteil ein hohlzylindrischer Einsatz in einen Bereich am ersten Ende des Schlauchs einführbar, wonach das erste Ende des Schlauchs mit eingeführtem Einsatz in eine hohlzylindrische Aufnahme des Führungsteils einführbar ist, so dass der Schlauch in der Aufnahme verklemmt wird. Bei der hohlzylindrischen Form handelt es sich insbesondere um eine kreiszylindrische Form, es sind aber auch z. B. polygonale, ovale oder konturierte Querschnitte möglich.

Der Einsatz ist insbesondere aus einem metallischen Material gefertigt. Er ist formstabil, so dass Presskräfte zwischen der Aufnahme und dem Einsatz aufgebaut werden können, die den Schlauch sicher festhalten.

Bevorzugt weist der Einsatz an einem seiner Enden einen radial nach aussen gerichteten Kragen zur Abstützung auf dem Führungsteil auf. Einerseits verhindert dies ein Zurückziehen des Einsatzes durch die Aufnahme des Führungsteils und damit ein unbeabsichtigtes Lösen des Schlauchs vom Führungsteil. Andererseits kann der Einsatz auf der entsprechenden Seite mit Hilfe des Kragens aus dem Schlauch herausgezogen werden, wonach der Schlauch auf einfache Weise aus der Aufnahme entfernbar ist. Der Kragen kann ringförmig umlaufend ausgebildet sein, es ist aber auch möglich, dass er die zentrale Öffnung des Einsatzes nur teilweise umschliesst. Er kann dabei aus einem oder mehreren am Umfang verteilten Kragenabschnitten gebildet sein.

Mit Vorteil umfasst die Vorrichtung weiter ein Verbindungsteil zur Anordnung in dem weiteren Rahmenrohr, wobei der mindestens eine Schlauch mit einem zweiten Ende am Verbindungsteil anordenbar ist. Der Schlauch verläuft somit von der Einleitungseinrichtung am Steuerrohr durch das Steuerrohr und das mindestens eine weitere Rahmenrohr bis zum Verbindungsteil, und er ist mit seinem ersten Ende an der Einleitungseinrichtung und mit seinem anderen Ende am Verbindungsteil angeordnet, insbesondere jeweils fixiert. So wird das Einführen und Zurückstossen des Kabels im Schlauch weiter vereinfacht. Zudem ergibt sich eine definierte Führung des Kabels vom Eintritt in das Steuerrohr bis zum Verbindungsteil im weiteren Rahmenrohr. Beschädigungen von Elementen des Rahmens oder von Elementen, die im Rahmen angeordnet sind, sowie auch Geräusche werden vermieden.

Das Verbindungsteil kann zur Anordnung mehrerer Schläuche ausgebildet sein. Es umfasst insbesondere mehrere parallel angeordnete Schlauchaufnahmen. Diese können insbesondere nebeneinander in einer Reihe positioniert sein, so dass sich eine flache Anordnung ergibt, die mit wenig Platzbedarf direkt auf der Innenseite des jeweiligen Rahmenrohrs positionierbar ist. Es sind aber auch alternative Geometrien mit unterschiedlichen Positionen und/oder Ausrichtungen möglich.

Die Befestigung des Schlauchs am Verbindungsteil erfolgt wiederum bevorzugt mithilfe eines hohlzylindrischen Einsatzes, der in einen Bereich am ersten Ende des Schlauchs einführbar ist, wonach das zweite Ende des Schlauchs mit eingeführtem Einsatz in eine hohlzylindrische Aufnahme des Verbindungsteils einführbar ist, so dass der Schlauch in der Aufnahme verklemmt wird. Bei der hohlzylindrischen Form handelt es sich insbesondere um eine kreiszylindrische Form, es sind aber auch z. B. ovale oder konturierte Querschnitte möglich.

Der Einsatz ist insbesondere aus einem metallischen Material gefertigt. Er ist formstabil, so dass Presskräfte zwischen der Aufnahme und dem Einsatz aufgebaut werden können, die den Schlauch sicher festhalten.

Bevorzugt weist der Einsatz an einem seiner Enden einen radial nach aussen gerichteten Kragen zur Abstützung auf dem Verbindungsteil auf. Einerseits verhindert dies ein Zurückziehen des Einsatzes durch die Aufnahme des Verbindungsteils und damit ein unbeabsichtigtes Lösen des Schlauchs vom Verbindungsteil. Andererseits kann der Einsatz auf der entsprechenden Seite mit Hilfe des Kragens aus dem Schlauch herausgezogen werden, wonach der Schlauch auf einfache Weise aus der Aufnahme entfernbar ist. Der Kragen kann ringförmig umlaufend ausgebildet sein, es ist aber auch möglich, dass er die zentrale Öffnung des Einsatzes nur teilweise umschliesst. Er kann dabei aus einem oder mehreren am Umfang verteilten Kragenabschnitten gebildet sein.

Mit Vorteil ist der mindestens eine Schlauch ein Glasfaserschlauch mit Silikonummantelung. Ein solcher Schlauch ist gleichzeitig flexibel und verschleissfest. Zudem vermeidet die Silikonummantelung Beschädigungen an Teilen in der Umgebung, z. B. Rahmenrohren oder dem Gabelschaft.

Die Erfindung umfasst auch einen Rahmen für ein Zweirad mit einer erfindungsgemässen Vorrichtung zum Führen von Kabeln.

Wenn ein Verbindungsteil zur Anordnung in dem weiteren Rahmenrohr vorhanden ist, so ist dieses in einer bevorzugten Ausführungsform am unteren Ende des Unterrohrs, in der Nachbarschaft des Tretlagers angeordnet. In Varianten kann ein solches Verbindungsteil auch am hinteren Ende des Oberrohrs angeordnet sein, z. B. in Fällen wo für die Kabelführung im Unterrohr nicht ausreichend Platz zur Verfügung steht, weil z. B. eine Antriebsbatterie im Unterrohr aufgenommen ist.

Das Verbindungsteil ist dabei bevorzugt direkt in das weitere Rahmenrohr eingeformt. Diese Lösung ist insbesondere bei Carbonrahmen umsetzbar.

Alternativ handelt es sich beim Verbindungsteil um eine separate Komponente, die auf der Innenseite des Rahmenrohrs befestigt, z. B. verklebt, wird. Diese Komponente kann z. B. aus einem Carbonmaterial, einer geeigneten Legierung oder einem geeigneten Kunststoff bestehen. Auch die Befestigung mittels einer Verschraubung oder einer Clipverbindung ist möglich.

Die Anordnung des Verbindungsteils im Rahmenrohr kann grundsätzlich an einer beliebigen geeigneten Fläche (unten, oben, rechts, links) erfolgen.

Damit sich Kabel im Bereich des Verbindungsteils verbinden, lösen oder zurückstossen lassen, ist das Verbindungsteil mit Vorteil im Bereich einer Rahmenöffnung angeordnet. Bei der Rahmenöffnung kann es sich z. B. um eine Zugangsöffnung zu einem Dämpfer, zu einem Aufnahmeraum oder zu einer Antriebsbatterie handeln oder auch um eine dedizierte Rahmenöffnung für den Zugriff zum Verbindungsteil.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:
- Fig. 1: eine Explosionsdarstellung einer ersten Ausführungsform einer erfindungsgemässen Einleitungseinrichtung mit daran angeordneten Schläuchen zur Aufnahme von Kabeln;
- Fig. 2: eine isometrische Ansicht eines Paars von Führungsteilen;
- Fig. 3: eine isometrische Ansicht der Führungsteile mit angebrachten Schläuchen;
- Fig. 4: eine isometrische Ansicht der auf einer Gabel angeordneten Einleitungseinrichtung;
- Fig. 5: eine Seitenansicht der Gabel, des Steuerrohrs und der Einleitungseinrichtung;
- Fig. 6: eine Draufsicht auf die Gabel mit montierter Einleitungseinrichtung;
- Fig. 7A, B: zwei Vertikalschnitte durch das Steuerrohr mit montierter Einleitungsvorrichtung;
- Fig. 7C: einen Horizontalschnitt durch das Steuerrohr und die Einleitungsvorrichtung;
- Fig. 8: eine Explosionsdarstellung einer zweiten Ausführungsform einer erfindungsgemässen Einleitungseinrichtung mit daran angeordneten Schläuchen zur Aufnahme von Kabeln;
- Fig. 9A: eine Explosionsdarstellung einer dritten Ausführungsform einer erfindungsgemässen Einleitungseinrichtung mit daran angeordneten Schläuchen zur Aufnahme von Kabeln;
- Fig. 9B: eine Querschnittsdarstellung der in einem Steuerrohr aufgenommenen Einleitungseinrichtung gemäss der dritten Ausführungsform;
- Fig. 10: eine Explosionsdarstellung eines erfindungsgemässen Verbindungsteils zur Anordnung in einem Unterrohr;
- Fig. 11: eine Darstellung des im Unterrohr angeordneten Verbindungsteils; und
- Fig. 12: eine schematische Darstellung der Montage der erfindungsgemässen Vorrichtung im Rahmen eines Fahrrads.

Grundsätzlich sind in den Figuren gleiche Teile mit gleichen Bezugszeichen versehen.

### Wege zur Ausführung der Erfindung

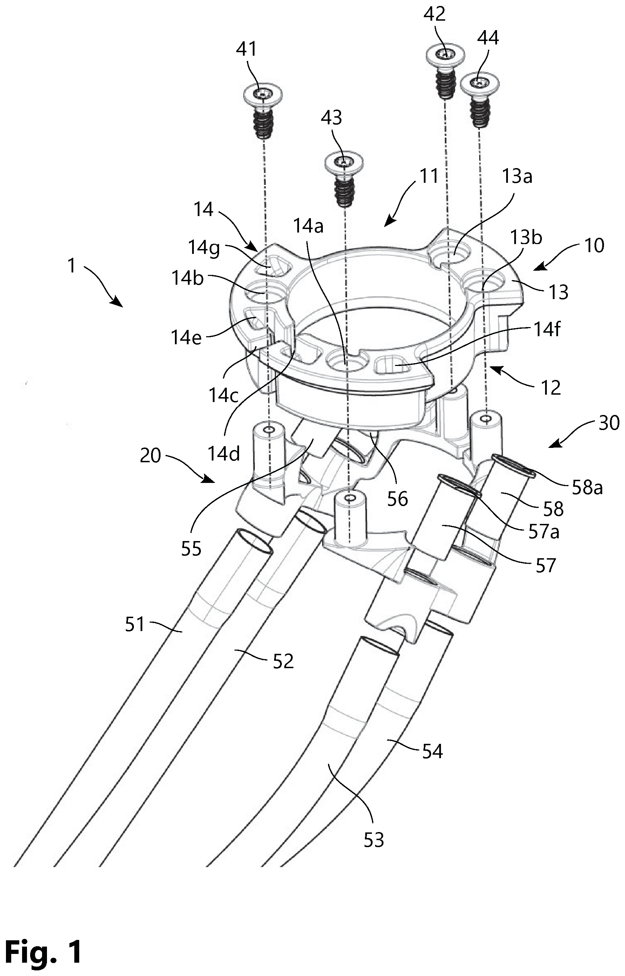

Die Figur 1 ist eine Explosionsdarstellung einer ersten Ausführungsform einer erfindungsgemässen Einleitungseinrichtung mit daran angeordneten Schläuchen zur Aufnahme von Kabeln. Die Einleitungseinrichtung 1 umfasst einen Klemmring 10 und zwei daran befestigte Führungsteile 20, 30.

Der Klemmring 10 hat im Wesentlichen die Form eines Kreisrings. Entlang des Umfangs sind symmetrisch zwei sektorartige Aussparungen 11, 12 mit einem Winkel von je ca. 45° vorhanden. Zwischen den Ausnehmungen befinden sich einerseits ein erstes Segment 13, das sich über einen Winkel von ca. 30° erstreckt und zwei kreiszylindrische Durchgangsöffnungen 13a, 13b aufweist, und andererseits ein zweites Segment 14, das sich über einen Winkel von ca. 160° erstreckt. Das zweite Segment weist in seiner Mitte einen radial durchgehenden Schlitz 14c auf. Seitlich in den Schlitz 14c münden beidseitig im Wesentlichen rechteckige Ausnehmungen 14d, 14e. Seitlich dieser Ausnehmungen sind zwei weitere kreiszylindrische Durchgangsöffnungen 14a, 14b vorhanden. Wiederum ausserhalb dieser Durchgangsöffnungen 14a, 14b finden sich zwei Durchgangsöffnungen 14f, 14g mit trapezförmiger Grundfläche. Die kreiszylindrischen Durchgangsöffnungen 13a, 13b, 14a, 14b münden stirnseitig in einen konzentrischen Abschnitt grösseren Durchmessers.

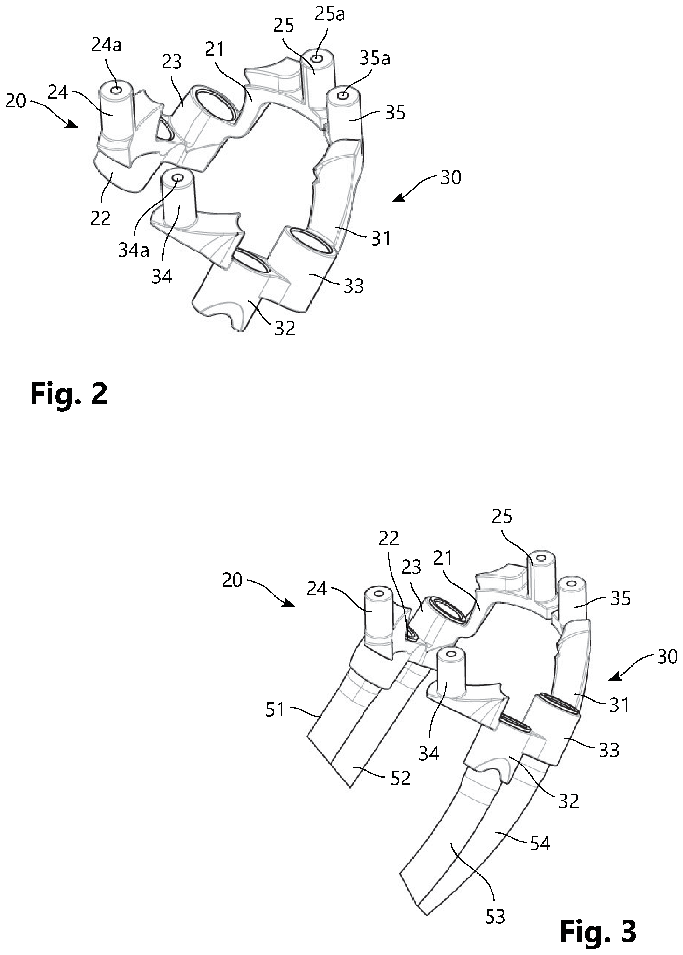

Die zwei Führungsteile 20, 30 sind aus Polyamid gefertigt und spiegelbildlich zueinander ausgeführt. Sie sind in der Figur 2 einzeln dargestellt. Jedes der Führungsteile 20, 30 weist einen ringartigen Rahmen 21, 31 auf. An diesem sind je zwei Führungszylinder 22, 23; 32, 33 einstückig ausgebildet. Ebenso sind an den Enden der Rahmen 21, 31 jeweils Befestigungsstifte 24, 25; 34, 35 einstückig ausgebildet. Diese haben eine zylindrische Form und weisen eine zentrische Öffnung 24a, 25a; 34a, 35a mit einem Innengewinde auf. Die zentralen Achsen der Führungszylinder 22, 23 des ersten Führungsteils und die zentralen Achsen der Führungszylinder 32, 33 des zweiten Führungsteils sind jeweils zueinander parallel. Sie weisen zudem in Bezug auf die allesamt parallelen zentralen Achsen der zentrischen Öffnungen 24a, 25a; 34a, 35a in den Befestigungsstiften 24, 25; 34, 35 einen Winkel von ca. 35° auf.

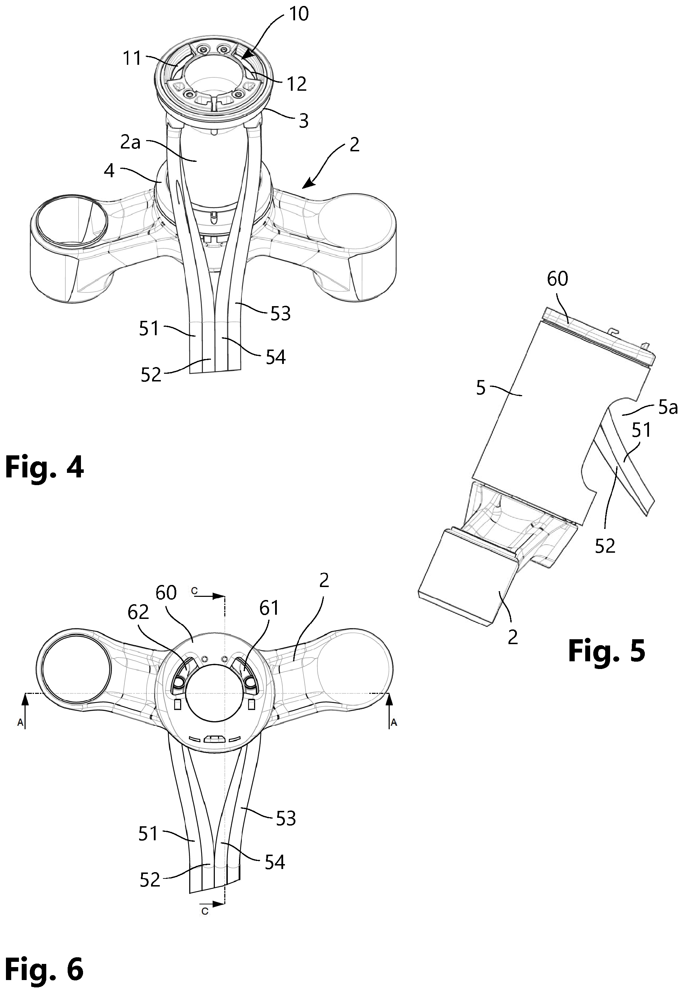

Die Führungsteile 20, 30 sind mit vier Schrauben 41, 42, 43, 44 mit dem Klemmring 10 verschraubt. Dazu verläuft jede der Schrauben 41...44 durch eine Durchgangsöffnung 13a, 13b, 14a, 14b im Klemmring 10, während die Gewinde der Schrauben 41...4 mit den Innengewinden in den zentrischen Öffnungen 24a, 25a; 34a, 35a der Befestigungsstifte 24, 25; 34, 35 zusammenwirken. Die Köpfe der Schrauben 41...44 sind in den Abschnitten grösseren Durchmessers der Durchgangsöffnungen 13a, 13b, 14a, 14b aufgenommen (siehe auch Figur 4). Die oberen Mündungen der Führungszylinder 22, 23; 32, 33 sind auf die sektorartigen Aussparungen 11, 12 im Klemmring 10 ausgerichtet.

In den Führungszylindern 22, 23; 32, 33 der Führungsteile 20, 30 sind erste Enden von vier Schläuchen 51, 52, 53, 54 aufgenommen, siehe auch Figur 3. Bei den Schläuchen 51, 52, 53, 54 handelt es sich um Glasfaserschläuche mit Silikonummantelung. Die Befestigung der Schläuche 51, 52, 53, 54 in den Führungszylindern 22, 23; 32, 33 erfolgt mit Hilfe von metallischen hohlzylindrischen Einsätzen 55, 56, 57, 58. Dazu werden die Schläuche 51...54 zunächst durch die Führungszylinder 22, 23; 32, 33 hindurchgezogen, und die Einsätze 55...58 werden in die Schläuche 51...54 eingesetzt. Die Schläuche 51...54 mit darin aufgenommenen Einsätzen 55...58 werden dann zurückgestossen, bis ein Kragen 57a, 58a des jeweiligen Einsatzes 55...58 auf der Stirnfläche des entsprechenden Führungszylinders 22, 23; 32, 33 aufliegt. Dabei wird der Schlauch zwischen der Innenfläche des Führungszylinders 22, 23; 32, 33 und dem Einsatz 55...58 verklemmt und so gesichert.

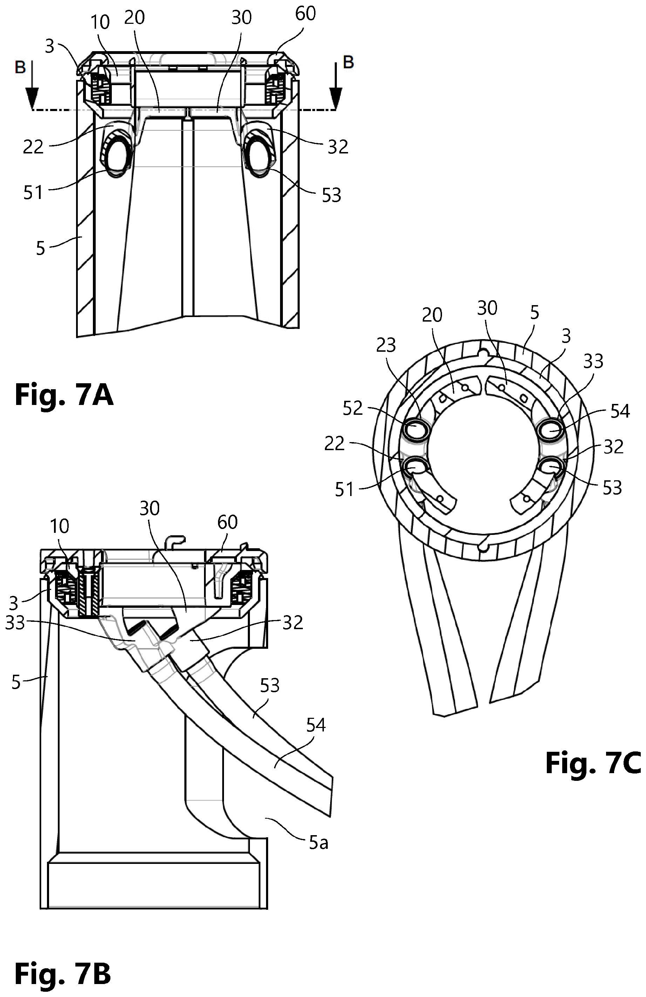

Die Figur 4 ist eine isometrische Ansicht der auf einer Gabel angeordneten Einleitungseinrichtung. Die Figur 5 zeigt eine Seitenansicht der Gabel 2, des Steuerrohrs 5 und der Einleitungseinrichtung, und die Figur 6 eine Draufsicht auf die Gabel 2 mit montierter Einleitungseinrichtung. Die Figur 7A zeigt einen ersten Vertikalschnitt durch das Steuerrohr mit montierter Einleitungsvorrichtung in der Ebene A-A (vgl. Figur 6). Die Figur 7B zeigt einen zweiten Vertikalschnitt durch das Steuerrohr mit montierter Einleitungsvorrichtung in der Ebene C-C (vgl. Figur 6). Die Figur 7C zeigt einen Horizontalschnitt durch das Steuerrohr und die Einleitungsvorrichtung in der Ebene B-B (vgl. Figur 7A).

Der Klemmring 10 sitzt auf dem oberen Lager 3 des Steuersatzes. Die am Klemmring 10 über die Führungszylinder 22, 23; 32, 33 der Führungsteile 20, 30 angeordneten Schläuche 51, 52, 53, 54 sind um den Gabelschaft 2a herum geführt und erstrecken sich im Wesentlichen diesem entlang nach unten. Sie können somit zusammen vom Steuerrohr 5 aufgenommen und durch eine seitliche Öffnung 5a aus dem Steuerrohr 5 in ein weiteres Rahmenrohr, z. B. das Unterrohr, geführt werden.

Das Steuerrohr 5 wird oben durch einen Deckel 60 aus Kunststoff abgeschlossen. Dazu weist der Deckel 60 auf seiner Unterseite Clipelemente auf, die mit den Ausnehmungen 14d, 14e und Durchgangsöffnungen 14f, 14g im Klemmring 10 zusammenwirken. Der Deckel 60 weist zwei bogenförmige Schlitze 61, 62 auf, die auf die Aussparungen 11, 12 im Klemmring 10 ausgerichtet sind. Durch diese Schlitze 61, 62 und die Aussparungen 11, 12 werden die Kabel in die Führungsteile 20, 30 und damit in die im Rahmen verlaufenden Schläuche 51, 52, 53, 54 geführt.

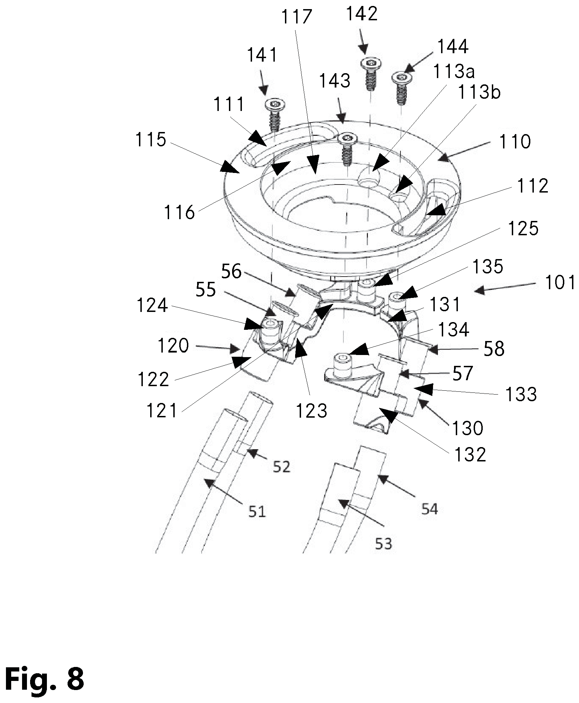

Die Figur 8 ist eine Explosionsdarstellung einer zweiten Ausführungsform einer erfindungsgemässen Einleitungseinrichtung mit daran angeordneten Schläuchen zur Aufnahme von Kabeln.

Die Einleitungseinrichtung 101 umfasst einen Haltering 110 und zwei daran befestigte Führungsteile 120, 130.

Der Haltering 110 hat im Wesentlichen die Form eines Kreisrings. Dieser lässt sich in das obere offene Ende eines Steuerrohrs einpressen, so dass er drehfest im Steuerrohr gehalten ist. Der Haltering 110 umfasst einen oberen Flansch 115, einen zylindrischen Abschnitt 116, der innen am Flansch 115 anschliesst, und einen unteren Flansch 117, der sich am unteren Ende des zylindrischen Abschnitts 116 nach innen erstreckt. Der untere Flansch 117 definiert eine zentrale Durchgangsöffnung und er weist eine Geometrie auf, die eine Aufnahme des Gabelschafts mit den entsprechenden Lagerelementen ermöglicht. Im oberen Flansch 115 sind zwei ringbogenförmige Durchgangsöffnungen 111, 112 mit einem Winkel von je ca. 45° vorhanden.

Die zwei Führungsteile 120, 130 sind aus Polyamid gefertigt und spiegelbildlich zueinander ausgeführt. Ihre Geometrie entspricht weitgehend derjenigen der Führungsteile der ersten Ausführungsform, die weiter oben, im Zusammenhang mit der Figur 2 näher beschrieben wurde. Jedes der Führungsteile 120, 130 weist einen ringartigen Rahmen 121, 131 auf. An diesem sind je zwei Führungszylinder 122, 123; 132, 133 einstückig ausgebildet. Ebenso sind an den Enden der Rahmen 121, 131 jeweils Befestigungsstifte 124, 125; 134, 135 einstückig ausgebildet. Diese haben eine zylindrische Form und weisen eine zentrische Öffnung mit einem Innengewinde auf. Die zentralen Achsen der Führungszylinder 122, 123 des ersten Führungsteils und die zentralen Achsen der Führungszylinder 132, 133 des zweiten Führungsteils sind jeweils zueinander parallel. Sie weisen zudem in Bezug auf die allesamt parallelen zentralen Achsen der zentrischen Öffnungen in den Befestigungsstiften 124, 125; 134, 135 einen Winkel von ca. 35° auf.

Die Führungsteile 120, 130 sind mit vier Schrauben 141, 142, 143, 144 mit dem Haltering 110 verschraubt. Dazu verläuft jede der Schrauben 141...144 durch eine Durchgangsöffnung 113a, 113b im unteren Flansch 117 des Halterings 110, während die Gewinde der Schrauben 141...144 mit den Innengewinden in den zentrischen Öffnungen der Befestigungsstifte 124, 125; 134, 135 zusammenwirken. Die Köpfe der Schrauben 141...144 sind in den Abschnitten grösseren Durchmessers der Durchgangsöffnungen 113a, 113b aufgenommen. Die oberen Mündungen der Führungszylinder 122, 123; 132, 133 sind auf die ringbogenförmigen Durchgangsöffnungen 111, 112 im Haltering 110 ausgerichtet.

In den Führungszylindern 122, 123; 132, 133 der Führungsteile 120, 130 sind erste Enden von vier Schläuchen 51, 52, 53, 54 aufgenommen. Bei den Schläuchen 51, 52, 53, 54 handelt es sich um Glasfaserschläuche mit Silikonummantelung. Die Befestigung der Schläuche 51, 52, 53, 54 in den Führungszylindern 122, 123; 132, 133 erfolgt analog zur ersten Ausführungsform mit Hilfe von metallischen hohlzylindrischen Einsätzen 55, 56, 57, 58. Dazu werden die Schläuche 51...54 zunächst durch die Führungszylinder 122, 123; 132, 133 hindurchgezogen, und die Einsätze 55...58 werden in die Schläuche 51...54 eingesetzt. Die Schläuche 51...54 mit darin aufgenommenen Einsätzen 55...58 werden dann zurückgestossen, bis ein Kragen des jeweiligen Einsatzes 55...58 auf der Stirnfläche des entsprechenden Führungszylinders 122, 123; 132, 133 aufliegt. Dabei wird der Schlauch zwischen der Innenfläche des Führungszylinders 122, 123; 132, 133 und dem Einsatz 55...58 verklemmt und so gesichert.

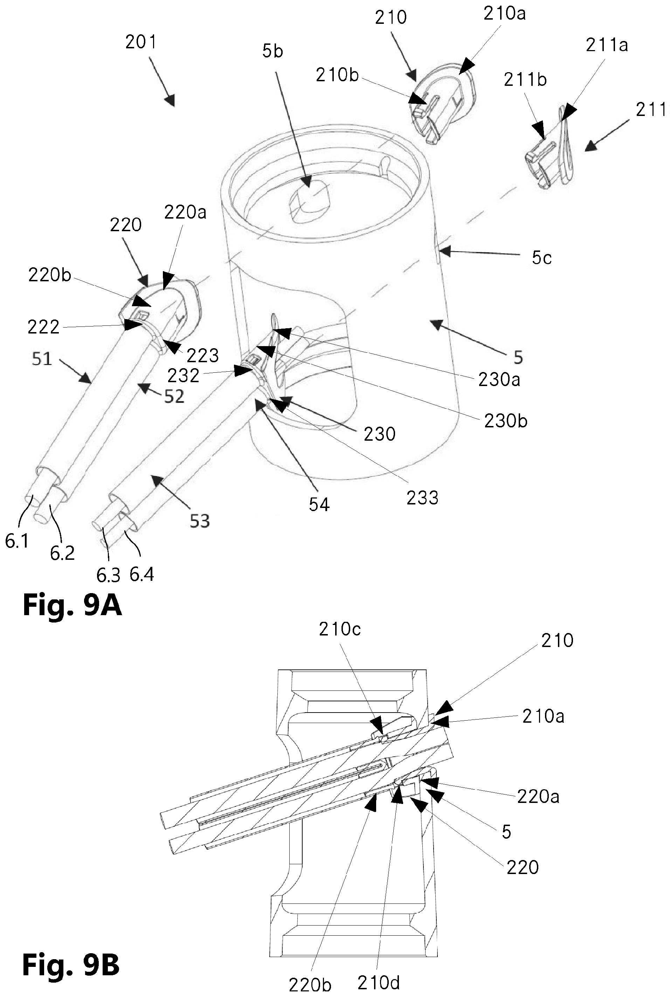

Die Figur 9A ist eine Explosionsdarstellung einer dritten Ausführungsform einer erfindungsgemässen Einleitungseinrichtung mit daran angeordneten Schläuchen zur Aufnahme von Kabeln. Die Figur 9B ist eine Querschnittsdarstellung der in einem Steuerrohr aufgenommenen Einleitungseinrichtung gemäss der dritten Ausführungsform.

Diese Einleitungseinrichtung 201 dient zum Einleiten von Kabeln in das Steuerrohr, durch zwei laterale Öffnungen 5b, 5c im Steuerrohr 5. Sie umfasst pro Öffnung 5b, 5c ein Halteteil 210, 211. Dieses umfasst einen Kragen 210a, 211a und einen prismatischen Einsatzteil 210b, 211b. Der prismatische Einsatzteil 210b, 211b lässt sich passend in die entsprechende Öffnung 5b, 5c des Steuerrohrs 5 einschieben, bis der Kragen 210a, 211a auf der Aussenfläche des Steuerrohrs 5 aufliegt. Mittels einer Clipverbindung lässt sich dann ein Führungsteil 220, 230 am entsprechenden prismatischen Einsatzteil 210b, 211b des Halteteils 210, 211 befestigen. Dazu weist das prismatische Einsatzteil 210b, 211b an seinem freien, dem Kragen 210a, 211a entgegengesetzten Ende nach aussen weisende Rastnasen 210c, 210d auf. Die Führungsteile 220, 230 weisen ebenfalls einen Kragen 220a, 230a auf sowie einen prismatischen Hauptteil 220b, 230b. Die Rastnasen 210c, 210d greifen in Aussparungen im Hauptteil 220b, 230b der Führungsteile 220, 230 ein und verriegeln letztere somit an den Halteteilen 210, 211. Die Wandung des Steuerrohrs 5 ist zwischen dem Kragen 210a, 211a des Halteteils 210, 211 und dem Kragen 220a, 230a des Führungsteils 220, 230 passend aufgenommen.

Jedes der Führungsteile 220, 230 definiert zwei Führungszylinder 222, 223; 232, 233. In diesen sind erste Enden von vier Schläuchen 51, 52, 53, 54 aufgenommen. Bei den Schläuchen 51, 52, 53, 54 handelt es sich um Glasfaserschläuche mit Silikonummantelung. Die Befestigung der Schläuche 51, 52, 53, 54 in den Führungszylindern 222, 223; 232, 233 erfolgt auf dieselbe Weise wie in den vorstehend beschriebenen Ausführungsformen, d. h. mit Hilfe von metallischen hohlzylindrischen Einsätzen, wobei der Schlauch 51, 52, 53, 54 zwischen der Innenfläche des Führungszylinders 222, 223; 232, 233 und dem Einsatz verklemmt und so gesichert wird.

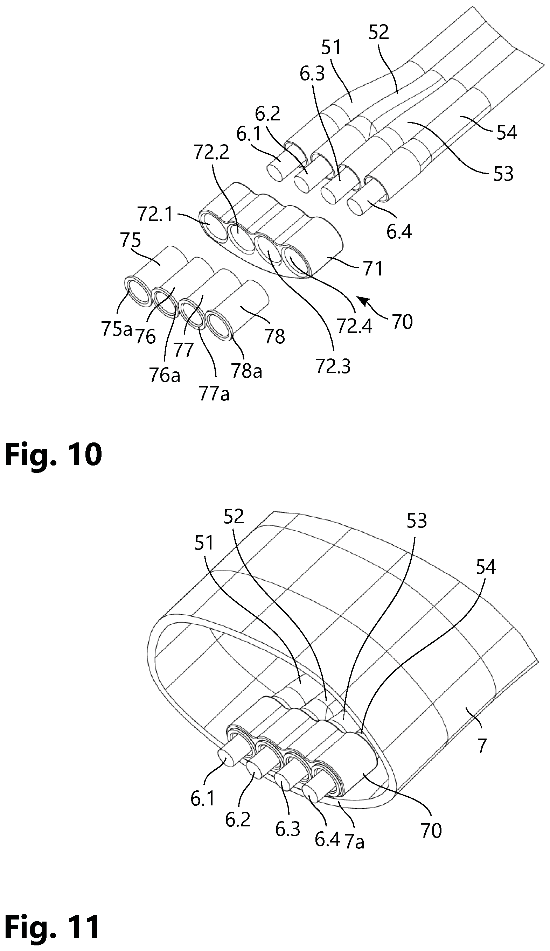

Die Figur 10 ist eine Explosionsdarstellung eines erfindungsgemässen Verbindungsteils zur Anordnung in einem Unterrohr. Die Figur 11 ist eine Darstellung des im Unterrohr angeordneten Verbindungsteils.

Das Verbindungsteil 70 umfasst ein Grundteil 71 und vier hohlzylindrische Einsätze 75, 76, 77, 78. Das Grundteil 71 besitzt einen Grundkörper mit vier zylindrischen Aufnahmen 72.1, 72.2, 72.3, 72.4, die in einer Reihe angeordnet sind. Die durch den Rahmen, insbesondere das Unterrohr, geführten Schläuche 51, 52, 53, 54 mit den darin geführten Kabeln 6.1, 6.2, 6.3. 6.4 können in den zylindrischen Aufnahmen 72.1, 72.2, 72.3, 72.4 befestigt werden. Dazu werden die Schläuche 51...54 zunächst durch die Aufnahmen 71.2...4 hindurchgezogen, und die Einsätze 75...78 werden in die Schläuche 51...54 eingesetzt. Die Schläuche 51...54 mit darin aufgenommenen Einsätzen 75...78 werden dann zurückgestossen, bis ein Kragen 75a, 76a, 77a, 78a des jeweiligen Einsatzes 75...78 auf der Stirnfläche des Grundteils 71 aufliegt. Dabei wird der Schlauch zwischen der Innenfläche der jeweiligen Aufnahme 72.1...4 und dem Einsatz 75...78 verklemmt und so gesichert.

Das Verbindungsteil 70 ist im dargestellten Ausführungsbeispiel im Bereich des hinteren Endes des Unterrohrs 7 an seiner unteren Wandung 7a befestigt, z. B. durch eine Verklebung. Es positioniert dort die Schläuche 51...54 und damit die darin geführten Kabel 6.1...4. Das Verbindungsteil ist insbesondere durch eine dortige Rahmenöffnung zugänglich, z. B. durch einen Zugang zu einem Dämpfer für den Hinterbau.

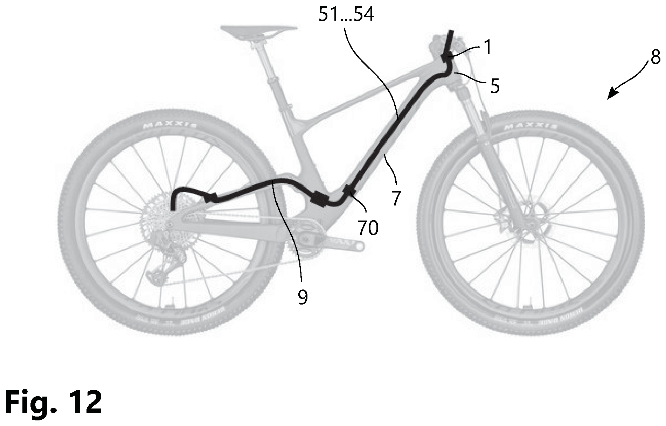

Figur 12 ist eine schematische Darstellung der Montage der erfindungsgemässen Vorrichtung im Rahmen eines Fahrrads 8. Die Einleitungseinrichtung 1 ist am oberen Ende des Steuerrohrs 5 angeordnet. Sie fixiert vier Schläuche 51...54 an einem Ende, während deren entgegengesetzte Enden am Verbindungsteil 70 am unteren Endes des Unterrohrs 7 fixiert sind. Mindestens eines der Kabel wird innerhalb des Rahmens vom Verbindungsteil 70 in eine feste Hülse 9 geführt, die im Bereich der Hinterachse zu einer Austrittsöffnung führt. Die Kabel können dann in diesem Bereich mit zu steuernden Komponenten, z. B. einem Schaltwerk, zusammenwirken.

Die Erfindung ist nicht auf die dargestellten Ausführungsbeispiele beschränkt. Namentlich die Geometrie und Anordnung der Elemente an der Einleitungsvorrichtung können in vielerlei Weise variiert werden. Wie oben erwähnt, kann das Verbindungsteil am hinteren bzw. unteren Ende des weiteren Rahmenrohrs unmittelbar im Rahmenrohr integriert, z. B. eingeformt, sein.

Zusammenfassend ist festzustellen, dass die Erfindung eine Vorrichtung zum Führen mindestens eines Kabels in einem Rahmen eines Zweirads schafft, welche Nachteile des Standes der Technik vermeidet.

### Bezugszeichenliste

- 1: Einleitungseinrichtung
- 2: Gabel
- 2a: Gabelschaft
- 3: Lager
- 5: Steuerrohr
- 5a: Öffnung
- 5b, 5c: Öffnung
- 6.1...4: Kabel
- 7: Unterrohr
- 7a: Wandung
- 8: Fahrrad
- 9: Hülse
- 10: Klemmring
- 11: Aussparung
- 12: Aussparung
- 13: Segment
- 13a,b: Durchgangsöffnung
- 14: Segment
- 14a, b: Durchgangsöffnung
- 14c: Schlitz
- 14d,e: Ausnehmung
- 14f,g: Durchgangsöffnung
- 20: Führungsteil
- 21: Rahmen
- 22: Führungszylinder
- 23: Führungszylinder
- 24: Befestigungsstift
- 24a: Öffnung
- 25: Befestigungsstift
- 25a: Öffnung
- 30: Führungsteil
- 31: Rahmen
- 32: Führungszylinder
- 33: Führungszylinder
- 34: Befestigungsstift
- 34a: Öffnung
- 35: Befestigungsstift
- 35a: Öffnung
- 41: Schraube
- 42: Schraube
- 43: Schraube
- 44: Schraube
- 51: Schlauch
- 52: Schlauch
- 53: Schlauch
- 54: Schlauch
- 55: Einsatz
- 56: Einsatz
- 57: Einsatz
- 57a: Kragen
- 58: Einsatz
- 58a: Kragen
- 60: Deckel
- 61: Schlitz
- 62: Schlitz
- 70: Verbindungsteil
- 71: Grundteil
- 72.1...4: Aufnahme
- 75: Einsatz
- 75a: Kragen
- 76: Einsatz
- 76a: Kragen
- 77: Einsatz
- 77a: Kragen
- 78: Einsatz
- 78a: Kragen
- 101: Einleitungseinrichtung
- 110: Haltering
- 111: Durchgangsöffnung
- 112: Durchgangsöffnung
- 113a, 113b: Durchgangsöffnung
- 115: Flansch
- 116: Abschnitt
- 117: Flansch
- 120: Führungsteil
- 121: Rahmen
- 122: Führungszylinder
- 123: Führungszylinder
- 124: Befestigungsstift
- 125: Befestigungsstift
- 130: Führungsteil
- 131: Rahmen
- 132: Führungszylinder
- 133: Führungszylinder
- 134: Befestigungsstift
- 135: Befestigungsstift
- 141: Schraube
- 142: Schraube
- 143: Schraube
- 144: Schraube
- 201: Einleitungseinrichtung
- 210: Halteteil
- 210a: Kragen
- 210b: Einsatzteil
- 210c: Rastnase
- 210d: Rastnase
- 211: Halteteil
- 211a: Kragen
- 211b: Einsatzteil
- 220: Führungsteil
- 220a: Kragen
- 220b: Hauptteil
- 222: Führungszylinder
- 223: Führungszylinder
- 230: Führungsteil
- 230a: Kragen
- 230b: Hauptteil
- 232: Führungszylinder
- 233: Führungszylinder

## Patentansprüche

1. Vorrichtung zum Führen mindestens eines Kabels (6.1, 6.2, 6.3, 6.4) in einem Rahmen eines Zweirads (8), umfassend:
a) eine an einem ersten Rohr (5) des Rahmens anbringbare Einleitungseinrichtung (1; 101; 201) zum Einleiten des mindestens einen Kabels (6.1, 6.2, 6.3, 6.4) in das erste Rohr;
b) mindestens einen Schlauch (51, 52, 53, 54) zur Aufnahme des Kabels (6.1, 6.2, 6.3, 6.4);
wobei der mindestens eine Schlauch (51, 52, 53, 54) mit einem ersten Ende an der Einleitungseinrichtung (1; 101; 201) angeordnet ist und im ersten Rohr (5) und mindestens einem weiteren Rahmenrohr (7) aufnehmbar ist.

2. Vorrichtung nach Anspruch 1, **dadurch gekennzeichnet, dass** das erste Rohr ein Steuerrohr (5) des Zweirads ist und dass die Einleitungseinrichtung (1; 101) ein ringförmiges Element (10; 110) zur Anordnung im Steuerrohr (5) umfasst, wobei das ringförmige Element (10; 110) mindestens eine Öffnung (11, 12; 111, 112) zur Durchführung des Kabels (6.1, 6.2, 6.3, 6.4) in das Steuerrohr (5) aufweist und wobei am ringförmigen Element (10; 110) ein starres Führungsteil (20, 30; 120, 130) angeordnet ist, wobei das erste Ende des Schlauchs (51, 52, 53, 54) steuerrohrinnenseitig am Führungsteil (20, 30; 120, 130) angeordnet ist, derart dass das Kabel (6.1, 6.2, 6.3, 6.4) durch die Öffnung (11, 12; 111, 112) in den Schlauch (51, 52, 53, 54) führbar ist.

3. Vorrichtung nach Anspruch 2, **dadurch gekennzeichnet, dass** das ringförmige Element ein Klemmring (10) eines Steuersatzes ist.

4. Vorrichtung nach Anspruch 2, **dadurch gekennzeichnet, dass** das ringförmige Element (110) in einem Presssitz im Steuerrohr (5) aufnehmbar ist.

5. Vorrichtung nach einem der Ansprüche 2 bis 4, **dadurch gekennzeichnet, dass** die mindestens eine Öffnung (11, 12) durch eine bogenförmige Ausnehmung an einem Aussenrand des ringförmigen Elements (10) gebildet ist.

6. Vorrichtung nach einem der Ansprüche 2 bis 5, **dadurch gekennzeichnet, dass** das Führungsteil (20, 30; 120, 130) derart ausgebildet ist, dass im Bereich des ersten Endes eine Mittelachse des Schlauchs (51, 52, 53, 54) in einem Winkel zu einer zentralen Symmetrieachse des ringförmigen Elements (10; 110) verläuft.

7. Vorrichtung nach einem der Ansprüche 2 bis 6, **dadurch gekennzeichnet, dass** das Führungsteil (20, 30; 120, 130) am ringförmigen Element (10; 110) abnehmbar befestigbar ist, insbesondere mittels einer Schraub- und/oder Clipverbindung.

8. Vorrichtung nach einem der Ansprüche 2 bis 7, **dadurch gekennzeichnet, dass** am Führungsteil (20, 30; 120, 130) mindestens zwei Schläuche (51, 52, 53, 54) befestigbar sind, wobei insbesondere die mindestens zwei Schläuche (51, 52, 53, 54) durch dieselbe Öffnung (11, 12; 111, 112) des ringförmigen Elements (10; 110) führbar sind.

9. Vorrichtung nach einem der Ansprüche 2 bis 8, **dadurch gekennzeichnet, dass** am ringförmigen Element (10; 110) mindestens zwei Führungsteile (20, 30; 120, 130) modular anbringbar sind.

10. Vorrichtung nach Anspruch 1, **dadurch gekennzeichnet, dass** die Einleitungseinrichtung (201) ein Haltelement (210, 211) zur Anordnung in einer lateralen Öffnung (5c) im ersten Rohr (5) umfasst, wobei das Halteelement (210, 211) mindestens eine Öffnung zur Durchführung des Kabels (6.1, 6.2, 6.3, 6.4) in das erste Rohr (5) aufweist und wobei am Halteelement (210, 211) ein starres Führungsteil (220, 230) angeordnet ist, wobei das erste Ende des Schlauchs (51, 52, 53, 54) innenseitig des ersten Rohrs (5) am Führungsteil (220, 230) angeordnet ist, derart dass das Kabel (6.1, 6.2, 6.3, 6.4) durch die Öffnung in den Schlauch (51, 52, 53, 54) führbar ist.

11. Vorrichtung nach Anspruch 10, **dadurch gekennzeichnet, dass** das Führungsteil (220, 230) am Halteelement (210, 211) abnehmbar befestigbar ist, insbesondere mittels einer Clipverbindung.

12. Vorrichtung nach Anspruch 10 oder 11, **dadurch gekennzeichnet, dass** am Führungsteil (220, 230) mindestens zwei Schläuche (51, 52, 53, 54) befestigbar sind, wobei insbesondere die mindestens zwei Schläuche (51, 52, 53, 54) durch dieselbe Öffnung des Halteelements (210, 211) führbar sind.

13. Vorrichtung nach einem der Ansprüche 2 bis 12, **dadurch gekennzeichnet, dass** zur Befestigung des Schlauchs (51, 52, 53, 54) am Führungsteil (20, 30; 120, 130; 220, 230) ein hohlzylindrischer Einsatz (55, 56, 57, 58) in einen Bereich am ersten Ende des Schlauchs (51, 52, 53, 54) einführbar ist, wonach das erste Ende des Schlauchs (51, 52, 53, 54) mit eingeführtem Einsatz (55, 56, 57, 58) in eine hohlzylindrische Aufnahme (22, 23, 32, 33) des Führungsteils (20, 30; 120, 130) einführbar ist, so dass der Schlauch (51, 52, 53, 54) in der Aufnahme (22, 23, 32, 33) verklemmt wird.

14. Vorrichtung nach Anspruch 13, **dadurch gekennzeichnet, dass** der Einsatz (55, 56, 57, 58) an einem seiner Enden einen radial nach aussen gerichteten Kragen (57a, 58a) zur Abstützung auf dem Führungsteil (20, 30; 120, 130) aufweist.

15. Vorrichtung nach einem der Ansprüche 1 bis 14, **gekennzeichnet durch** ein Verbindungsteil (70) zur Anordnung in dem weiteren Rahmenrohr (7), wobei der mindestens eine Schlauch (51, 52, 53, 54) mit einem zweiten Ende am Verbindungsteil (70) anordenbar ist.

16. Vorrichtung nach einem der Ansprüche 1 bis 15, **dadurch gekennzeichnet, dass** der mindestens eine Schlauch (51, 52, 53, 54) ein Glasfaserschlauch mit Silikonummantelung ist.

17. Rahmen für ein Zweirad mit einer Vorrichtung zum Führen von Kabeln nach einem der Ansprüche 1 bis 16.

18. Rahmen nach Anspruch 17 mit einer Vorrichtung zum Führen von Kabeln nach Anspruch 10, wobei das Verbindungsteil direkt in das weitere Rahmenrohr eingeformt ist.

19. Rahmen nach Anspruch 17 oder 18 mit einer Vorrichtung zum Führen von Kabeln nach Anspruch 10, wobei das Verbindungsteil (70) im Bereich einer Rahmenöffnung angeordnet ist.
